# EUROPEAN PATENT SPECIFICATION

(11) **EP 4 051 446 B1**
(45) Date of publication and mention of the grant of the patent: **02.12.2026**
(21) Application number: 20815921.0
(22) Date of filing: 30.10.2020
(51) Int. Cl.: B23C 3/35, B23C 1/08, B23P 15/00, B44B 3/00, G05B 19/00, G05B 19/4093

(54) **KEY-CUTTING MACHINE WITH DEVICE FOR ENGRAVING A KEY**
SCHLÜSSELSCHNEIDEMASCHINE MIT EINER VORRICHTUNG ZUM GRAVIEREN EINES SCHLÜSSELS
MACHINE À COUPER DES CLÉS AVEC DISPOSITIF DE GRAVURE DE CLÉ

(30) Priority: 31.10.2019 IT 201900020208
(43) Date of publication of application: 07.09.2022
(73) Proprietor: SILCA S.p.A., 31029 Vittorio Veneto (TV) (IT)
(72) Inventor: NIGRO, Gennaro Giovanni, 31010 Mareno di Piave (TV) (IT); PIGATTI, Giorgio, 31016 Cordignano (TV) (IT); DA RODDA, Oreste, 31020 Revine Lago (TV) (IT); TONELLO, Fabrizio, 33074 Fontanafredda (PN) (IT); CATTAI, Franco, 31029 Vittorio Veneto (TV) (IT)
(74) Representative: Braidotti, Andrea
(86) International application number: PCT/IB2020/060204
(87) International publication number: WO 2021/084492

(56) References cited:
- CH-A5- 673 612
- CN-A- 108 068 524
- DE-A1- 10 031 713
- US-A1- 2016 114 412
- US-A1- 2016 368 067

## Description

The present invention relates to a key cutting machine according to the preamble of claim 1. A related key-cutting machine is for example known from US2016/368067A1.

Mechanical key cutting machines are known, which provide for the presence of a feeler which is made to slide on the profile of the original key to be duplicated, locked in a first clamp, and of a end mill, integral with the feeler, and acting on the key blank to be coded, locked in a second terminal, fixed with respect to the first.

Electronic duplicating machines are also known which use, instead of the feeler, an optical reader of the key bitting; in particular, the optical reader comprises a light source facing the original key and a sensor which collects the rays emitted by said source and passing through the coded portion of the key. These machines also require the presence of two clamps, one for the key blank to be coded, facing the end mill, and one for the original key to be duplicated, facing the optical reader. The two clamps are integral with each other and are movable with respect to the optical reader and the end mill, which are fixed with respect to the base of the machine.

Dedicated machines are also known which are configured exclusively to make an incision on one or both faces of the head of a key; in particular, these machines are used to engrave a code, logo or image on the head of the key and this may be required for various purposes, for example to identify the manufacturer of the key by its brand, or to supply a series useful information associated with the key and/or requested by the owner/manager of the key itself, for example, such information may relate to the access whose lock can be unlocked/locked by means of the key engraved in this way, or a serial code of the key itself, etc.

In the industrial field, for mass production, there are already known automated machines that carry out the operations of bitting the key and engraving its head in sequence. These machines, however, are particularly complex and bulky and, therefore, are not suitable for use in a professional or semi-professional context (i.e. in key duplication centers/shops).

Currently, therefore, for use in a professional or semi-professional environment, the operations of bitting the key and engraving its head are carried out in two distinct and independent machines. It is easy to understand how this is not completely satisfactory since the need to equip oneself with two distinct machines involves an increase in overall dimensions, requiring in particular to have suitable spaces available inside the duplicating center; furthermore, the use of two distinct machines makes the whole procedure more laborious and slow since, once the duplication process has been carried out in the first machine, the key must then be removed from the latter to be then inserted into the second machine in order to be able to carry out the engraving process (or vice versa).

Currently, again for use in the professional or semi-professional field, solutions are also known in which the operations of bitting the key and engraving its head are performed within the same machining area provided in the same machine. However, in known machines of this type, the intervention of the operator is always required to pass from one operation to another; in particular, in these machines, at the end of the bitting operation, the operator must move the key to a second clamp or remove the bitting end mill and install the end mill for engraving, enter new data and then start the operation of engraving.

DE10031713 describes a solution for making blanks or for duplicating keys in which a clamp is provided, which is movable in translation and in rotation, for the support of the key and a milling unit, with a single cutting element, which is mobile in translation (both vertically and horizontally) and in rotation.

US8523499 describes a device for brushing or crimping an article, such as an externally toothed wheel, used in wind turbines. In particular, the device comprises means for retaining and rotating the product and two milling units which are motorized independently or face opposite each other.

CH673612 describes a traditional key cutting machine with a single vertical end mill for the bitting processing of a key held by a corresponding clamp.

US2016/114412 describes a machine, suitable for industrial use, for the processing of keys in which a fixed milling unit is provided with three end mills, horizontally oriented, parallel and side by side, to machine a key that is mounted in a complex a frame configured to move said key.

CN204430389 discloses a key duplicating machine comprising a milling unit which is fixed and is provided with a circular end mill and a further milling unit which is stationary and is provided with an end mill; the machine also includes a clamp for holding the key to be machined and usable for both the two milling units.

The purpose of the invention is to propose a key-cutting machine having a device for engraving a key, preferably for engraving the head of said key with a predefined code and/or image. The device is integrated in the key-cutting machine (duplicating machine) which is configured to perform the encryption of the key.

Another object of the invention is to propose a key-cutting machine (duplicating machine) which allows to perform key duplication and engraving operations quickly and easily.

Another object of the invention is to propose a key-cutting machine (duplicating machine) which has particularly small dimensions.

Another object of the invention is to propose a key-cutting machine (duplicating machine) which can be obtained simply, quickly and with low costs.

Another object of the invention is to propose a key-cutting machine (duplicating machine) which is highly automated.

Another object of the invention is to propose key-cutting machine (duplicating machine) which is an improvement and/or an alternative with respect to traditional solutions.

Another object of the invention is to propose a key cutting machine which makes the entire key processing procedure particularly efficient, a procedure which includes both the cutting step on the key blank in order to reproduce on the stem, or on a portion of it, a given bitting profile, is the step of engraving a given code/image on one or both faces of the head of said key.

All these purposes, both individually and in any combination thereof, and others which will result from the following description, are achieved, according to the invention, with a key-cutting machine according to appended claim 1.

The present invention is further clarified hereinafter in a preferred embodiment thereof, given purely by way of non-limiting example with reference to the annexes tables of drawings, in which:
- Figure 1: shows a perspective view of an electronic key cutting machine according to the invention during the cutting step of the blade of a key,
- Figure 1a: shows an enlarged detail of fig. 1,
- Figure 2: shows in front view a part of the front operating area of the machine of fig. 1,
- Figure 3: shows according to a plan view the front operating area of the machine of fig. 1,
- Figure 4: is a perspective view of the same electronic key cutting machine of fig. 1 during the step of engraving the head of a key,
- Figure 4a: shows an enlarged detail of fig. 4,
- Figure 5: shows a front view of a part of the front operating area of the machine of Fig. 4,
- Figure 6: shows according to a plan view the front operating area of the machine of fig. 4,

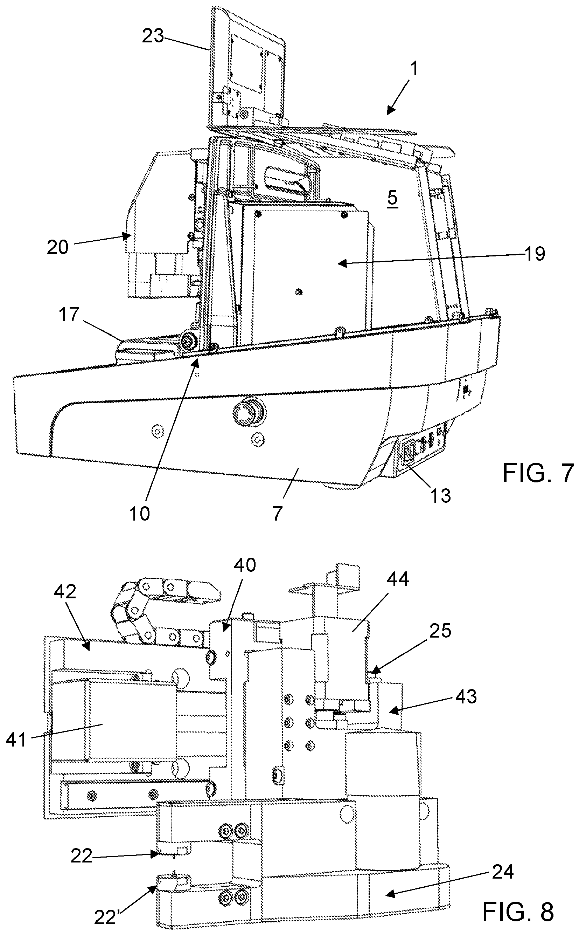

- Figure 7: shows in perspective view the duplicating machine of fig. 1 and 4 without the rear casing,
- Figure 8: shows a perspective view of the engraving (incision)
- device: of the key-cutting machine according to the invention, without the front cover,

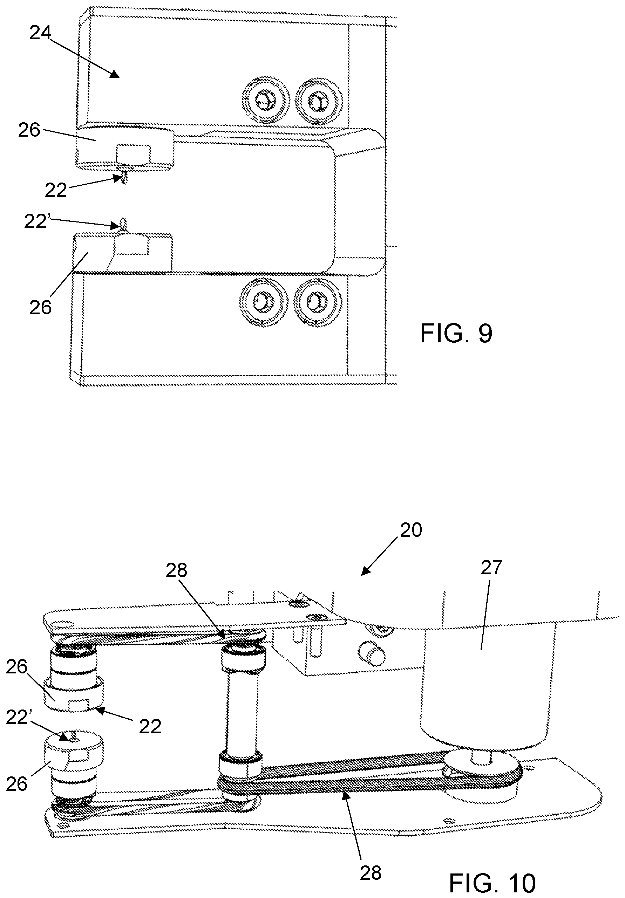

- Figure 9: shows a detail of the device of fig. 8 in correspondence with the end mills,
- Figure 10: shows a detail of the device of fig. 8 in correspondence with the end mills and without the external cover,

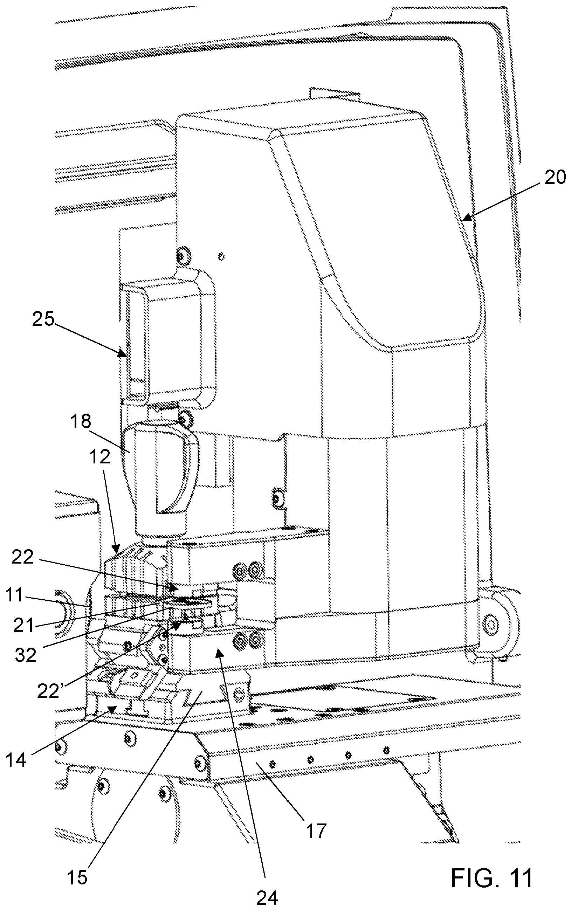

- Figure 11: shows in perspective view the engraving device with the upper end mill in action on the upper face of the key,

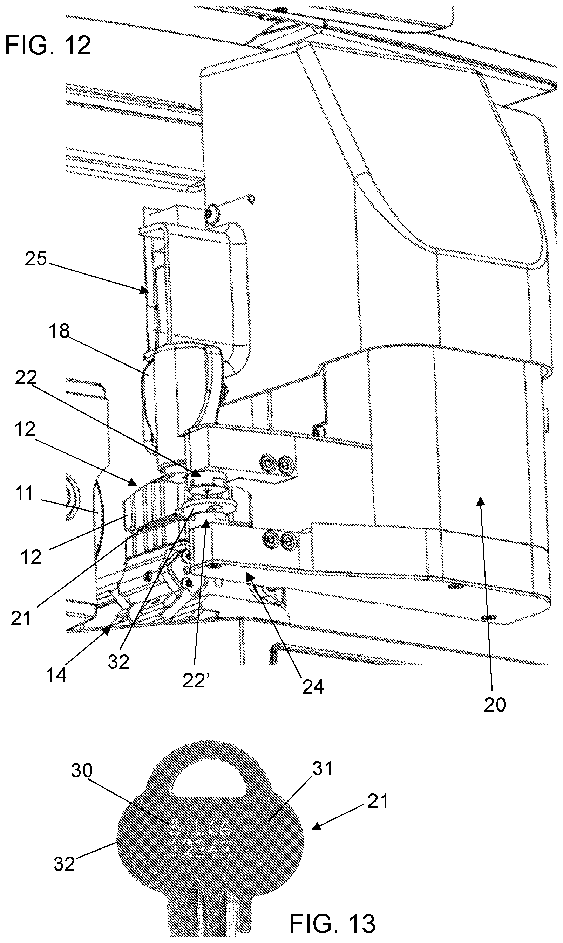

- Figure 12: shows in perspective view the engraving device with the end mill lower face in action on the lower face of the key,
- Figure 13: shows a face of the head of a key in which a code has been engraved by means of the engraving device.

Preliminarily, it should be noted that by "key" we mean a traditional type key, preferably metallic, comprising a head and a stem, on which the bitting is intended to be obtained. Preferably, the key has a laminar shape (i.e. one of the dimensions is much smaller than the other two) and, in particular, has two opposite faces substantially parallel to each other.

As can be seen from the figures, according to the invention, the electronic key cutting machine 1 comprises a support structure 10 and also comprises:
- a front operational area 2 which is accessible by the operator and which is preferably removably covered and separated, at least partially, from the external environment 3 by means of a cover and/or protection casing (not shown) movable with respect to said support structure 10,
- a rear containment area 5 which is covered and separated from the external environment by a casing 6 which is preferably fixed, i.e. not movable with respect to said support structure 10.

Conveniently, the duplicating machine 1 is of the professional or semi-professional type, that is, it is of the type generally present and used in centers/shops for key duplication. In particular, the duplicating machine 1 is of the type not used/usable in the industrial field and/or in series production.

Conveniently, the support structure 10 comprises at the bottom a support base 7 and also a dividing element 8, preferably defined by a substantially vertical dividing wall, which is mounted on said support base 7. In particular, the aforementioned two areas 2, 5 are defined above the support base 7 and are separated from each other by said dividing element 8.

Conveniently, the casing is associated with the support structure 10 so as to be able to be rotated or in any case moved with respect to the latter, suitably, moreover, the casing 6 is stably associated with the support structure 10 by means of suitable mechanical fixing means, for example by means of interlocking engagement and/or traditional fastening members (screws, rivets, bolts, etc.).

At least one end mill 11 (preferably but not necessarily a circular end mill), or other cutting member, of at least one milling and/or cutting unit 11' (for flat keys and/or for laser keys) and at least one clamp 12 to hold a key, which can be a key blank to be machined or an already encrypted key to be duplicated and whose encryption you want to read/acquire, or an already encrypted key on which you then want to obtain an incision at one face of its head, are provided.

Preferably, the milling and/or cutting unit 11' is electrically isolated from the rest of the machine.

Advantageously, in the front operational area 2 are also provided means 14 for moving the clamp 12. Preferably, these moving means 14 comprise two carriages 15, 17 on which said at least one clamp 12 is mounted, to thus allow the movement of the key held by the corresponding clamp 12 both with respect to the end mill 11 and with respect to an engraving device 20, with which the machine 1 is provided, as well as to allow movement of the key held by the corresponding clamp 12 between the end mill 11 and the engraving device 20, and in particular between the area of action of the end mill 11 and the area of action of the engraving device 20.

Conveniently, the means for moving the clamp 12 are configured to move the clamp itself, and therefore a key held by said clamp, between a position closest to the drilling and/or cutting tool 11' and a position closer to the engraving device 20.

Preferably, a first carriage 15 is provided which is motorized so as to allow the movement of said first carriage in both directions along a first horizontal axis X of the machine 1. Preferably, a second carriage 17 is mounted on the first carriage 15, which is also motorized so as to allow movement of the latter with respect to the first carriage 15 in both directions along the horizontal axis Y (which is perpendicular to the axis X) of the machine 1.

Advantageously, in an embodiment not shown, a further carriage (not shown) can be provided which is motorized so as to allow the handling of the clamp 12 and/or of the first carriage 15 and/or of the second carriage 17 along a third dimension Z, substantially vertical and perpendicular to the X and Y axes.

Conveniently, the clamp 12 which comprises a support is mounted on the second carriage 17. rto and two jaws superimposed and mounted on a pin fixed to said support. Conveniently, the jaws have a square plan and the facing surfaces are differently shaped so as to be able to hold keys with different profiles together.

Conveniently, the clamp 12 is configured to retain the stem of the key 21 between its jaws and, in particular, to retain it at its lateral edge which is not intended to be coded (and which is generally substantially straight).

Advantageously, a knob 18 is associated with the upper portion of the pin of the clamp 12 and has the function of controlling the approach and removal of the two jaws and their locking to the support.

Conveniently, the carriages 15, 17 are driven and made to advance with respect to the end mill 11, within the area of action of the end mill 11 defined in the front operational area 2, so as to obtain in sequence the corresponding encryption slots on the stem of a key blank.

Conveniently, the rear containment area 5 is configured to house the components of the machine 1 for which direct access by the operator is not required during normal operation of the machine itself. In particular, in the rear containment area 5 are housed the motor (not shown) for driving the end mill 11 and the mechanical transmission members (not shown) for connecting the output of the motor to the end mill holder shaft, preferably, said end mill holder shaft is partially housed in the rear containment area 5 and protrudes into the front operational area 2.

Advantageously, the motors (not shown), preferably of the stepper type, for moving the first carriage 15 and the second carriage 17, are also housed in the rear containment area 5.

Advantageously, the machine 1 comprises a control and command unit 19 of the entire machine 1 and, in particular, said control and command unit controls the motorization of the displacement means 14 of the clamp 12 and/or the actuation of said end mill 11, and/or other cutting member.

Preferably, said control and command unit 19 is housed inside the rear containment area 5. Conveniently, said control and command unit 19 comprises an electronic card configured and programmed for the control and command of the various components of the machine 1.

Preferably, said unit 19 is electrically connected with the motors of the machine 1 and with a plurality of sensors installed on the machine itself in order to manage and monitor its operation. In particular, said unit 19 controls the motorization of the displacement means 14 of the clamp 12.

Preferably, said unit 19 also comprises memorization means.

Advantageously, said unit 19 can be connected to an external electronic device by means of one or more data communication interfaces 13 (for example, traditional ports for cables or connectors), or via wireless connections, to thus allow the machine 1 to exchange (in reception and/or transmission) of data, commands or information with the outside world.

Advantageously, the control unit 19 comprises and/or is associated with a user interface, for example a touch screen 23 and/or a control panel which allow the user to control the machine 1.

The machine 1 comprises a device 20 for making an incision 30 in correspondence of the two faces 31 of a key 21, preferably for engraving on the head 32 of a key a predefined code and/or a predefined image.

The engraving device 20 comprises at least one pair of engraving tools which are conveniently actuated, in rotation and/or translation (for example by pressing it against the face of the key), so as to engrave at least one face 31 of the key.

Preferably, the engraving tools comprise two end mills 22 and 22', or two other tools with a rotating tip, which are driven in rotation around their longitudinal development axis.

Conveniently, in a version not shown here, the engraving tool can comprise an engraving tip which is pressed against the face of the key and which acts as a sliding engraver; in particular, the tip of this tool is pressed against the face of the key and is made to advance so as to rub/scratch said face and, therefore, the resulting incision 30 is defined by the smears/scratches obtained from said sliding contact.

Conveniently, the end mill 22 comprises a shank, for its assembly on a suitable mandrel 26, and a head in which the cutting portions of the end mill itself are formed.

Preferably, said end mill 22 has a particularly small diameter, for example from about 0.1 mm to about 1 mm (defined at its tip).

Preferably, the incision device 20 comprises a pair of end mills 22 and **2**2' as said engraving tools, configured to act respectively on two mutually opposite faces 31 of the key 21, when it is held by the clamp 21. The cutting portions of the upper end mill 22 (and therefore intended to engrave the upper face of the key) are obtained in correspondence with its lower end, while the cutting portions of the lower end mill 22' (and therefore intended to engrave the lower face of the key) are obtained at its upper end. Conveniently, both end mills 22 and 22' have an axis of rotation which is oriented substantially vertically and they are vertically facing and aligned with each other.

The two end mills 22 and 22' are arranged so that the respective cutting portions are aligned and oriented vertically in opposite directions.

Both end mills 22 and 22' are mounted on the support unit 24 so that the respective axes of rotation of the end mills are oriented substantially vertically (i.e. along the direction of development of the axis Z); moreover, said rotation axes are also arranged substantially perpendicular to the faces (parallel to each other) of the head of the key 21, when the latter is held by the clamp 12; suitably, in this condition, the faces of the head of the key 21 lie on respective substantially horizontal planes (and preferably defined by the X and Y axes).

The two end mills 22 and 22' are mounted on the same support unit 24 which, in this case, preferably comprises a substantially C-shaped portion with the two parallel horizontal portions that each support one of the two end mills. Alternatively, in an embodiment not shown, the two end mills 22, 22' can be mounted on two distinct elements of the same support unit 24.

The two end mills 22, 22' are mounted on the support unit 24**,** prefereably so that the respective ends in which the cutting portions are defined are mutually spaced apart by a greater distance than the thickness of the head of the key 21 to be engraved.

Conveniently, both end mills 22 and 22' are activated in rotation by the same and single motor 27 which is mounted on the support unit 24. Conveniently, mechanical transmission members 28 (preferably comprising pulleys and belts) are also provided inside the support unit 24 to transmit the rotation of the driving pulley, which is associated with the output of the motor 27, to the respective spindles 26 on which the end mills 22 and 22' are mounted to cause the rotation of the latter around their respective longitudinal axes.

Preferably, the two end mills 22, 22' are made to rotate around a vertical axis in opposite directions, however, they could also be driven in rotation in the same direction.

The engraving device 20 comprises movement means 25 configured to translate in a controlled manner the support unit 24, and consequently also the end mills 22 and 22' along a substantially vertical direction, i.e. along axis Z, in order to cause the cutting parts of the end mill 22 and/or 22' to approach/move away from the face of the key 21 in which the incision 30 is intended to be made.

The movement means 25 are also configured to translate in a controlled manner the support unit 24, and consequently also the end mills 22 and 22', with respect to said key 21 along at least one horizontal direction (i.e. along the X axis and/or Y), preferably along a single horizontal direction (i.e. along the X axis), to cause the end mills 22 and 22' to move towards/away from the clamp 12 which holds the key 21 in which it is intended to be made the incision 30.

Advantageously, the movement means 25 are configured to translate in a controlled way the support unit 24, and consequently also the end mills 22 and 22' both along a vertical direction (i.e. along the Z axis) and along two horizontal directions perpendicular to each other (i.e. along the X and Y axes).

Preferably, the movement means 25 comprise a first frame 40 which is motorized so as to allow the movement of said first frame in both directions along a first horizontal axis X or Y of the machine 1. In particular, a first frame 40 is associated with a first linear actuator 41 which causes the movement of said first frame 40 along a guide and/or support bracket 42. Conveniently, the first linear actuator 41 is mounted on said guide bracket and/or support 42.

Preferably, a second frame 43 is mounted on the first frame 40, which is also motorized so as to allow movement of the latter with respect to the first frame 40 in both directions along the vertical axis Z of the machine 1. In particular, a second linear actuator 44 is associated with the second frame 43 which causes the movement of said second frame 43 along a guide defined in said first frame 40. Conveniently, the second linear actuator 44 is mounted on the first frame 40.

Conveniently, the support unit 24 is mounted on the second frame 43 and, therefore, the movement of the first frame 40 causes the movement, along a horizontal axis X or Y, of the second frame 43 and of the support unit 24 with said end mills 22 and 22', while the movement of the second frame 43 causes the movement of the support unit 24 with said end mills 22 and 22' along the vertical axis Z.

Advantageously, the engraving device 20 is mounted on the dividing element 8 and, preferably, the movement means 25 comprise and/or are associated with an element, such as for example the guide and support bracket 42, which is mounted and fixed to the support structure 10 of the machine 1. Conveniently, said guide and/or support bracket 42 of said device 20 is fixed to the face of said partition element 8 facing towards the front operational area 2.

Preferably, the engraving device 20 is entirely housed inside the front operational area 2 of the machine.

Conveniently, said first 41 and/or said second linear actuator 44 is of the mechanical or electromechanical type and preferably comprises a stepping motor.

Preferably, the incision device 20 also comprises a control unit (not shown) for the activation/deactivation of the rotation motor 27 of said end mills 22 and 22' and of the actuators 41 and 44 of the movement means 25. In particular, this control unit of the device 20 is configured to command/control the power supply of said motor 27 for rotation of said end mills 22 and 22' and of the actuators 41 and 44 of the movement means 25.

Conveniently, said control unit of the device 20 comprises a processor which, preferably but not necessarily, corresponds to the control and command unit 19 of the whole machine. Alternatively, the processor of the control unit of the device 20 can be implemented in an electronic board separate from the control and command unit 19 of the duplicating machine 1, although the two processors are suitably connected and communicating with each other.

Conveniently, the control unit of the device 20 is programmed to command and control the speed and/or direction of rotation of the drive motor 27 of said end mills 22 and 22'. Conveniently, the control unit of the device 20 is programmed to command and control the actuators 41 and 44 of the movement means 25 to thus cause the movement of said end mills 22 and 22' along at least two axes, preferably along the vertical axis Z or the horizontal axis X.

As said, the movement means 25 are configured to move the support unit 24, and therefore said end mills 22 and 22' with respect to the key 21 which is held by the same clamp 12 used to hold the key itself during processing, carried out by the end mill 11 of the cutting unit 11', aimed at obtaining the bitting of the stem of said key.

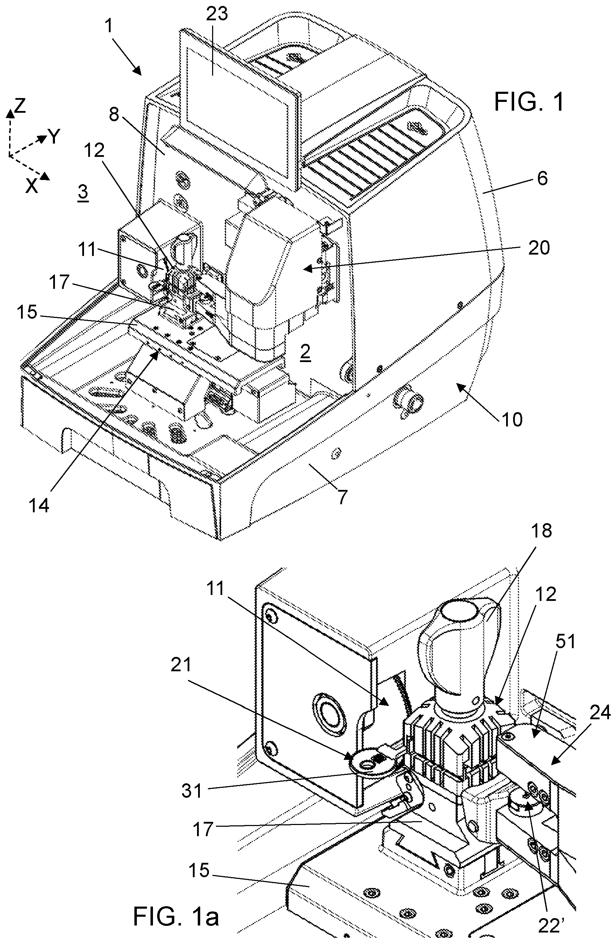

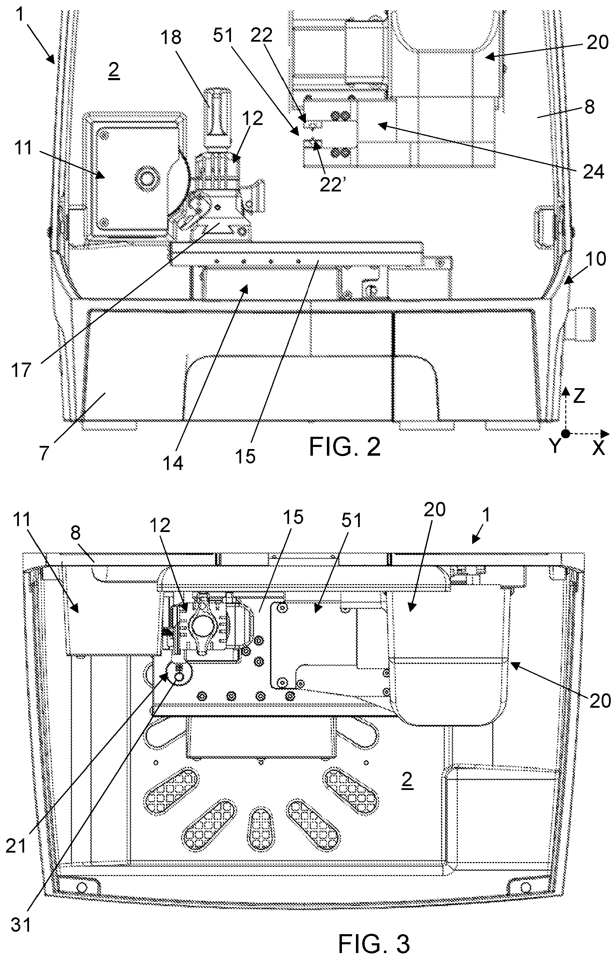

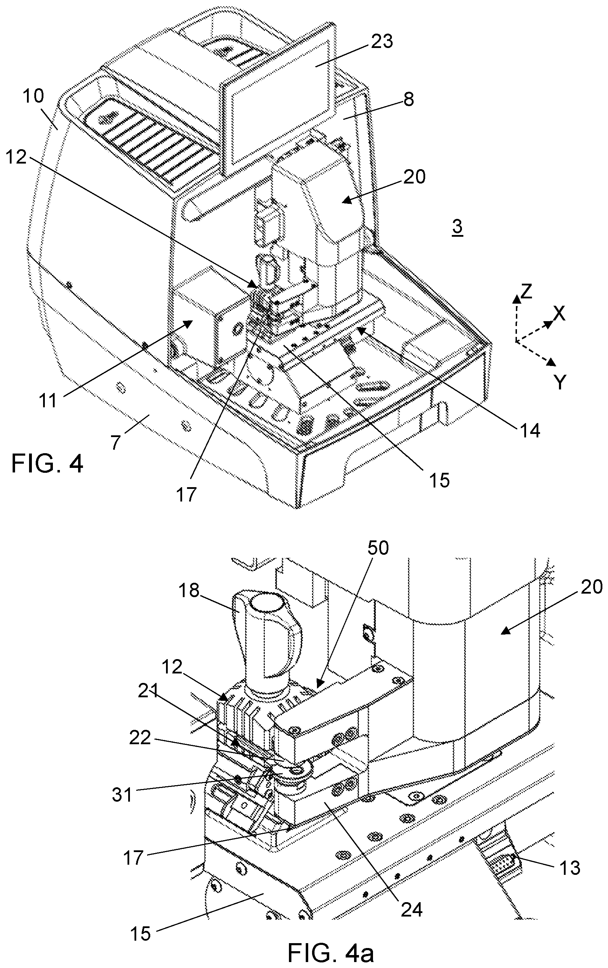

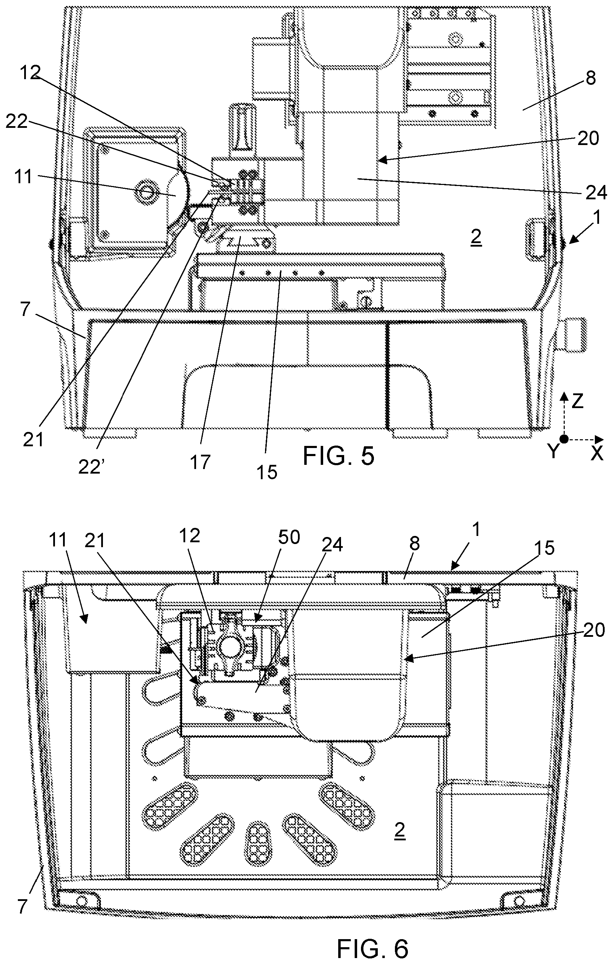

The movement means 25 are configured to move the support unit 24, and therefore said end mills 22 and 22' along at least one horizontal axis (i.e. along the X axis) between a work condition 50 (see figures 4, 4a, 5 and 6), in which said end mills 22 and 22' are close to the clamp 12 and respectively positioned above or below a corresponding face 31 of a key 21 to be engraved, when it is clamped in clamp 12, and a rest condition 51 (see Figures 1, 1a, 2 and 3), in which said end mills 22 and 22' and the support unit 24 are spaced from the clamp 12 - and therefore from the key 21 held by the latter - in order not to clutter the removal and/or insertion of the key 21 inside the clamp itself.

Conveniently, the action of the moving means 14 of the clamp 12 and/or of the movement means 25 of said end mills 22 and 22' cause the relative movement along the three axes X, Y and Z of said end mills 22 and 22' with respect to the key 21 held by the clamp. Preferably, while the end mills 22 and 22' remain stationary (i.e. while the movement means 25 are deactivated), the moving means 14 of the clamp 12 cause the movement of the latter, and therefore of the key 21 held by the clamp, along the two horizontal axes X and Y, thus allowing to engrave on a portion of the head 32 of the key 21 a continuous groove defining a single alphanumeric character and/or an image of the code to be engraved on the head of the key. Preferably, while the clamp 12 and therefore the key 21 remain stationary (i.e. while their displacement means 14 are deactivated), the movement means 25 of said end mills 22 and 22' cause the latter to be moved along the Z axis so as to interrupt the incision of the continuous groove defining a single alphanumeric character and/or image, to then pass to engrave a further groove - separate from the previous one - defining a further and distinct character and/or image of the code to be engrave on the head of the key.

The movement means 25 also cause the movement of said end mills 22 and 22' along the Z axis so as to bring the respective face 31 of the key 21 into contact respectively with the upper end mill 22 or with the lower end mill 22'.

Conveniently, the processor of the control and command unit 19 of the machine 1 is electrically connected to the displacement means 14 of the clamp 12 to thus allow their control; the processor of the control unit of the engraving device 20 is electrically connected to the movement means 25 of said at least one end mill 22 and/or 22', to thus allow their control; suitably, moreover, in this case, the two processors (i.e. that of the control and command unit 19 of the machine 1 and that of the engraving device 20) are electrically connected so as to communicate with each other and thus coordinate and synchronize the action of both said means for displacing 14 and movement 25. Alternatively, if the control and command unit 19 of the machine and the control unit of the device engraving 20 are implemented in a single processor, then the latter is electrically connected with both means of displacement 14 and movement 25 for their coordinated and synchronized control.

Alternatively, the moving means 14 of the clamp 12 and the movement means 25 of said end mills 22 and 22' can be activated simultaneously to cause the respective movement along the X and/or Y axis and this to in order to engrave on a face 31 of the key 21 a continuous groove defining a desired alphanumeric character and/or an image.

Conveniently, sensors (not shown) are associated with the displacement means 14 of the clamp 12, which are electronically connected to the control and command unit 19 of the machine 1, to detect the position of the clamp and thus suitably control its movement along the X and/or Y axes.

Conveniently, sensors are associated with the movement means 25 of said end mills 22 and 22', which are electronically connected to the control unit of the device 20, to detect the position of said end mills 22 and 22' and thus suitably control their movement along the X and/or Y axes.

Conveniently, the movement means 25 of said end mills 22 and 22' are associated with traditional limit switch devices.

Conveniently, the engraving device 20 is electrically isolated from the rest of the machine 1 and, in particular, from the support structure 10. Advantageously, the entire engraving device 20 is electrically isolated from the dividing element 8 on which it is mounted, preferably by means of a sheet of polyethylene terephthalate (also known by the trade name "mylar") which is interposed between the back of the bracket 42 and the front face of the dividing element 8.

Advantageously, said engraving device 20 also comprises means for detecting when the free end (provided with the cutting portions) of at least one of the two end mills 22 and 22', comes into contact with the face 31 of the key 21 to be engraved. In particular, for this purpose, at least one of the two end mills 22 and 22' - and preferably both - is associated with an electrical contact (not shown) configured in such a way that, when the tip of the end mill comes into contact with the key 21 held by clamp 12, the closure of an electric circuit occurs and, suitably, this is detected/communicated to the control unit 20 of the device 20 to thus correspondingly control the movement means 25 along the' vertical axis Z.

Suitably, therefore, the movement means 25 are configured to move vertically along the Z axis until the electrical contact present in correspondence with the end mill of the tip comes into contact with the face 31 of the key 21, thus closing the electrical circuit, or possibly this translation can continue for a certain time interval after the closure of the electrical circuit.

The operation of the key-cutting machine, according to the invention, is clear from what has just been described.

First, the operator accesses the front operational area 2 of the machine 1 in order to position the key blank 21 to be coded and engraved in correspondence with the clamp 12.

Once this has been done, the operator can set and control, by acting on traditional means of input (buttons or touch-screen 23) of which the machine 1 is provided, the cutting operation of the key 21 blocked on the clamp 12 so as to replicate on the stem of this, by means of the end mill 11 (or other cutting device) provided in the front operational area 2 of the machine, a specific bitting profile.

Conveniently, before, during or - preferably - after having carried out the coding process carried out by means of the end mill 11 of the cutting unit 11', the operator can set and command the activation of the engraving device 20 in order to engrave a code and/or predefined image on one or both faces 31 of the key 21 held by said clamp 12.

In particular, the operator can set and control, by acting on traditional input means (buttons or touch-screen 23) of which the machine 1 is provided with the codes and/or images (or other signs in general) to be engraved on the face 31 or on the faces of the key 21. For this purpose, the control and/or command unit of the machine or the control units of the device 20 are configured to obtain, on the basis of the codes and/or images to be engraved, the corresponding instructions to be provided to the moving means 14 of the clamp and/or to the movement means 25 of said end mills.

Conveniently, the codes and/or images to be engraved can be the same on both faces 31 of the key or they can be different.

Then, once the engraving device 20 has been activated, the control unit of the device activates the movement means 25 so as to translate the end mills 22 and 22' horizontally and thus bring them into working condition 50, i.e. in a condition in which the end mills are vertically aligned with and respectively positioned above and below the upper face 31 and the lower face of the key 21 to be engraved. Conveniently, in this phase, also the displacement means 14 of the clamp 12 could be operated in such a way as to make the clamp 12, and therefore the key 21 held by it move horizontally, in order to bring it closer to the end mills 22 and 22' of the engraving device 20.

Subsequently, the movement means 25 cause the end mill 22, tatterto be translated along a vertical direction (i.e. along the Z axis) until the cutting portions (defined at the tip) of the end mill 22 are brought into contact with the face 31 of the key 21 to be engraved.

Advantageously, when the end mill 22 encounters the face 31 of the key 21 the electric circuit closes and the occurrence of such a condition is detected by the control device 20.

Subsequently, then, activates the rotation motor 27 of tool 22.

Suitably, the moving means 14 of the clamp 12 and/or the movement means 25 cause the relative movement of the head 32 of the key 21 with respect to said end mill, activated in rotation, so as to obtain one or more continuous grooves, each of which defines an alphanumeric character of a code or image to be engraved on the face of the key.

Advantageously, if the key 21 is to be engraved on both faces 31 of its head 32, the above operation can then be repeated with the other end mill of the device 20 at the other face of the key.

Once the incision has been completed, the movement means 25 move said end mills 22 and 22' away from the key 21, to thus allow the operator to take the coded key 21 from the clamp 12 at its stem and engraved at its head.

Conveniently, the incision device 20 according to the invention has been described mainly in its application aimed at making an incision 30 in correspondence of one or both faces 31 of the head 32 of a key, however it is understood that said device can also be used to make one or more incisions in correspondence with the face of the stem, incisions that for example define the key bitting in the case of "laser" or "trace" keys, that is, those keys in which the key, both internal and external, is pinned performed by obtaining/engraving, using an end mill, a slot and/or groove on one or both faces of the key blade.

From what has been said it is clear that the key-cutting machine, according to the invention, having a device for engraving two faces of a key is particularly advantageous in that:
- it is more convenient, efficient and highly automated; in particular, it allows to have a machine in which a single processing flow of a key is implemented since, first, the coding processing of the blade of a key is carried out and, subsequently, automatically and without interruptions, the processing of engraving of a code and/or image on the head of the key itself,
- it is compact and economical,
- it allows to engrave both faces of the key head in a particularly precise way.

## Claims

1. Key-cutting machine (1), preferably of the professional or semi-professional type, comprising:
- a support structure (10),
- a front operational area (2) which is accessible by an operator,
- at least one milling and/or cutting unit (11') which is positioned in said front operational area (2) and which comprises at least one end mill (11), and/or another cutting member, to carry out the bitting processing of a key (21),
- at least one clamp (12), which is positioned in said front operational area (2), to hold said key (21) to be machined, preferably to hold said key (21) so that its face (31) to be engraved is arranged substantially horizontally, and **characterized in that** it comprises a device (20) for engraving two faces (31) of said key (21), preferably of the head (32) of said key, said device being positioned inside the front operational area (2) of said key-cutting machine (1), said device comprising:
- at least one pair of engraving tools (22, 22') which are mounted on a support unit (24), each engraving tool (22, 22') is provided, at its free end, with cutting sections for engraving a corresponding face (31) of a key (21), each engraving tool (22, 22') of said pair is configured to act on one of the two opposite faces (31) of the key (21), the free ends of said at least one pair of engraving tools (22, 22') being mutually facing and spaced apart and distancing by a greater distance than the thickness that the key (21) to be engraved has in correspondence with one of its areas, preferably corresponding to the head of said key, intended to be engraved by said tools, the free ends of said engraving tools (22, 22') being vertically aligned and facing each other, said two engraving tools (22, 22') of said at least one pair being operated by the same motor (27) mounted on said support unit (24),
- movement means (25) configured to translate in a controlled manner said support unit (24) and the at least one pair of engraving tools (22, 22') along a substantially vertical axis (Z), to thus bring into contact/move away the cutting sections of each engraving tool (22, 22') of said pair with/from said face (31), to be engraved, of the key (21) when it is held by said clamp (12), and along at least one horizontal axis (X, Y), to bring said engraving tools (22, 22') closer to/away from said clamp (12) intended to hold said key (21),
- a control unit for controlling said movement means (25).

2. Key-cutting machine according to claim 1, **characterized in that** said device comprises a support element (42) of said movement means (25), said support element (42) being configured to be fixed to the support structure (10) of said key cutting machine (1).

3. Key-cutting machine according to one or more of the preceding claims, **characterized in that** said control unit is configured to control the activation/deactivation of said motor (27) for driving said two engraving tools (22, 22') of said at least a pair of engraving tools (22, 22').

4. Key-cutting machine according to one or more of the preceding claims, **characterized in that**:
- said engraving tools comprise two end mills (22, 22'), or two other tools with a rotating tip,
- said motor (27) is configured to rotate said two end mills (22, 22'), or said two other rotating tip tools, around their longitudinal development axis which is oriented substantially vertically (Z).

5. Key-cutting machine according to one or more of the preceding claims, **characterized in that** said support unit (24) comprises a substantially "C" -shaped portion with two parallel horizontal sections that each support one of said engraving tools (22, 22') of said couple.

6. Key-cutting machine according to one or more of the preceding claims, **characterized in that** said two engraving tools (22, 22') of said pair are driven in rotation by the same motor (27) according to opposite rotation directions.

7. Key-cutting machine according to one or more of the preceding claims, **characterized in that** said movement means (25) comprise:
- a first frame (40) which is motorized so as to allow the movements of said first frame in both directions along a first horizontal axis (X, Y) of the machine (1),
- a second frame (43) which is mounted on the first frame (40) and which is motorized so as to allow movements of said second frame (43) with respect to the first frame (41) in both directions along the vertical axis (Z) of the machine (1), said support unit (24) and said engraving tools (22, 22') being also mounted on the second frame.

8. Key-cutting machine according to one or more of the preceding claims, **characterized in that** the device comprises means for detecting when the free end, provided with the cutting portions, of at least one of the two engraving tools (22, 22') comes into contact with the face (31) of the key (21) to be engraved, said detection means being connected to the control unit for correspondingly controlling the translation caused by said movement means (25) along the axis vertical (Z).

9. Key-cutting machine (1) according to one or more of the previous claims, **characterized in that**:
- said at least one clamp (12) is configured to hold the same key (21) both during a bitting process carried out by means of said end mill (11), and/or another cutting member, and during an engraving process carried out by means of said device (20),
and **in that** it comprises:
- displacement means (14) of said clamp (12) along two horizontal axes (X, Y) perpendicular to each other of said machine (1), said displacement means (14) of said clamp (12) being configured to move the same key (21), held by said clamp (12), between a position closest to said at least one milling and/or cutting unit (11') and a position closest to said device (20) to engrave at least one face (31) of the key.

10. Machine according to claim 9, **characterized in that** said displacement means (14) of said clamp (12) comprise:
- a first carriage (15) which is motorized so as to allow the movements of said first carriage in both directions along a first horizontal axis X of the machine (1),
- a second carriage (17) which is mounted on the first carriage (15) and which is also motorized so as to allow the movement of said second carriage (17) with respect to the first carriage (15) in both directions along the horizontal axis Y (which is perpendicular to the X axis) of the machine (1).

11. Machine according to claim 9 or 10, **characterized in that** the movement means (25) are configured for moving the support unit (24), and then said engraving tools (22, 22') mounted on said support unit, along the at least one horizontal axis between a working condition (50), in which said engraving tools (22, 22') are close to the clamp (12) and respectively positioned above and below the upper face (31) and the lower face of the key (21) to be engraved, when it is clamped in the clamp (12), and a rest condition (51), in which said engraving tools (22, 22') and the support unit (24) are spaced from the clamp (12) - and therefore from the key (21) held by the latter - so as not to clutter the removal and/or insertion of the key (21) inside the clamp itself.

12. Machine according to one or more of claims 9-11, **characterized in that** it comprises a control and command unit (19) which controls the motorization of the displacement means (14) of the clamp (12) and/or the actuation of said end mill (11), and/or another cutting member.

13. Machine according to one or more of the preceding claims 9-12, **characterized in that** it comprises a control unit which is configured to control said displacement means (14) of said clamp (12) so as to perform sequentially, preferably completely automated, the following operations:
- move the key (21), held by said clamp (12), with respect to the end mill (11), and/or to said other cutting member, in order to create a specific cut on said key (21),
- move the key (21), always held by the same clamp (12), near the area of action of said cutting device (20),
- move the key (21), always held by the same clamp (12), with respect to the engraving tools (22, 22') of said engraving device (20) in order to make a specific engraving on at least one face (31) of said key (21).

14. Machine according to one or more of claims 9-13, **characterized in that** it comprises a control unit which is configured to control said displacement means (14) of said clamp (12) so as to perform sequentially, preferably completely automated, the following operations:
- to move the key (21), held by the clamp (12), with respect to the engraving tools (22, 22') of said engraving device (20) in order to make a specific incision on at least one face (31) of said key (21).
- move the key (21), always held by the same clamp (12), near the action area of the end mill (11), and/or of said other cutting member,
- moving the key (21), held by said clamp (12), with respect to the end mill (11), and/or to said other cutting member, in order to create a specific bitting on said key (21).

## Patentansprüche

1. Schlüsselschneidemaschine (1), vorzugsweise des professionellen oder halbprofessionellen Typs, umfassend:
- eine Stützstruktur (10),
- einen vorderen Arbeitsbereich (2), der für einen Bediener zugänglich ist,
- mindestens eine Fräs- und/oder Schneideinheit (11'), die in dem vorderen Arbeitsbereich (2) angeordnet ist und mindestens einen Schaftfräser (11) und/oder ein weiteres Schneidelement umfasst, um die Bearbeitungsschritte an einem Schlüssel (21) durchzuführen,
- mindestens eine Klemme (12), die in dem vorderen Arbeitsbereich (2) angeordnet ist, um den zu bearbeitenden Schlüssel (21) zu halten, vorzugsweise so, dass die zu gravierende Fläche (31) des Schlüssels (21) im Wesentlichen horizontal ausgerichtet ist,
und **dadurch gekennzeichnet, dass** sie eine Vorrichtung (20) zum Gravieren von zwei Flächen (31) des Schlüssels (21), vorzugsweise des Schlüsselkopfes (32), umfasst, wobei die Vorrichtung innerhalb des vorderen Arbeitsbereichs (2) der Schlüsselschneidemaschine (1) angeordnet ist, wobei die Vorrichtung Folgendes umfasst:
- mindestens ein Paar von Gravurwerkzeugen (22, 22'), die an einer Stützeinheit (24) angebracht sind, wobei jedes Gravurwerkzeug (22, 22') an seinem freien Ende mit Schneidabschnitten zum Gravieren einer entsprechenden Fläche (31) eines Schlüssels (21) versehen ist, jedes Gravurwerkzeug (22, 22') des Paares so ausgelegt ist, dass es auf eine der beiden gegenüberliegenden Flächen (31) des Schlüssels (21) einwirkt, wobei die freien Enden des mindestens einen Paares von Gravurwerkzeugen (22, 22') einander zugewandt und voneinander beabstandet sind, und zwar um einen Abstand, der größer ist als die Dicke, die der zu gravierende Schlüssel (21) an einer seiner Stellen aufweist, vorzugsweise entsprechend dem Kopf des Schlüssels, der durch die Werkzeuge graviert werden soll, wobei die freien Enden der Gravurwerkzeuge (22, 22') vertikal ausgerichtet sind und einander zugewandt sind, wobei die beiden Gravurwerkzeuge (22, 22') des mindestens einen Paares von demselben Motor (27) angetrieben werden, der an der Halterungseinheit (24) angebracht ist,
- Bewegungsmittel (25), die so ausgelegt sind, dass sie die Stützeinheit (24) und das mindestens eine Paar von Gravurwerkzeugen (22, 22') entlang einer im Wesentlichen vertikalen Achse (Z) kontrolliert verschieben, um so die Schneidabschnitte jedes Gravurwerkzeugs (22, 22') des Paares mit der zu gravierenden Fläche (31) des Schlüssels (21) in Kontakt zu bringen bzw. von dieser zu entfernen, wenn dieser von der Klemme (12) gehalten wird, sowie entlang mindestens einer horizontalen Achse (X, Y), um die Gravurwerkzeuge (22, 22') näher an die Klemme (12) heranzuführen bzw. von dieser wegzubewegen, die zum Halten des Schlüssels (21) bestimmt ist,
- eine Steuereinheit zum Steuern der Bewegungsmittel (25).

2. Schlüsselschneidemaschine nach Anspruch 1, **dadurch gekennzeichnet, dass** die Vorrichtung ein Stützelement (42) der Bewegungsmittel (25) umfasst, wobei das Stützelement (42) so ausgebildet ist, dass es an der Stützstruktur (10) der Schlüsselschneidemaschine (1) befestigt werden kann.

3. Schlüsselfräsmaschine nach einem oder mehreren der vorstehenden Ansprüche, **dadurch gekennzeichnet, dass** die Steuereinheit so ausgelegt ist, dass sie die Aktivierung/Deaktivierung des Motors (27) zum Antreiben der beiden Gravurwerkzeuge (22, 22') des mindestens einen Paares von Gravurwerkzeugen (22, 22') steuert.

4. Schlüsselschneidemaschine nach einem oder mehreren der vorstehenden Ansprüche, **dadurch gekennzeichnet, dass**:
- die Gravurwerkzeuge zwei Schaftfräser (22, 22') oder zwei andere Werkzeuge mit einer rotierenden Spitze umfassen,
- der Motor (27) so ausgelegt ist, dass er die beiden Schaftfräser (22, 22') oder die beiden anderen Werkzeuge mit rotierender Spitze um ihre Längsachse dreht, die im Wesentlichen vertikal (Z) ausgerichtet ist.

5. Schlüsselschneidemaschine nach einem oder mehreren der vorstehenden Ansprüche, **dadurch gekennzeichnet, dass** die Stützeinheit (24) einen im Wesentlichen "C"-förmigen Abschnitt mit zwei parallelen horizontalen Abschnitten umfasst, die jeweils eines der Gravurwerkzeuge (22, 22') des Paares tragen.

6. Schlüsselschneidemaschine nach einem oder mehreren der vorstehenden Ansprüche, **dadurch gekennzeichnet, dass** die beiden Gravurwerkzeuge (22, 22') des Paares von demselben Motor (27) in entgegengesetzte Drehrichtungen angetrieben werden.

7. Schlüsselschneidemaschine nach einem oder mehreren der vorstehenden Ansprüche, **dadurch gekennzeichnet, dass** die Bewegungsmittel (25) Folgendes umfassen:
- einen ersten Rahmen (40), der motorisch angetrieben ist, um die Bewegungen des ersten Rahmens in beide Richtungen entlang einer ersten horizontalen Achse (X, Y) der Maschine (1) zu ermöglichen,
- einen zweiten Rahmen (43), der an dem ersten Rahmen (40) angebracht ist und motorisch angetrieben wird, um Bewegungen des zweiten Rahmens (43) relativ zu dem ersten Rahmen (41) in beide Richtungen entlang der vertikalen Achse (Z) der Maschine (1) zu ermöglichen, wobei die Stützeinheit (24) und die Gravurwerkzeuge (22, 22') ebenfalls am zweiten Rahmen angebracht sind.

8. Schlüsselschneidemaschine nach einem oder mehreren der vorstehenden Ansprüche, **dadurch gekennzeichnet, dass** die Vorrichtung Mittel umfasst, um zu erfassen, wann das mit den Schneidabschnitten versehene freie Ende mindestens eines der beiden Gravurwerkzeuge (22, 22') mit der Fläche (31) des zu gravierenden Schlüssels (21) in Kontakt kommt, wobei die Erfassungsmittel mit der Steuereinheit verbunden sind, um die durch die Bewegungsmittel (25) entlang der vertikalen Achse (Z) verursachte Verschiebung entsprechend zu steuern.

9. Schlüsselschneidemaschine (1) nach einem oder mehreren der vorstehenden Ansprüche, **dadurch gekennzeichnet, dass**:
- die mindestens eine Klemme (12) so ausgelegt ist, dass sie denselben Schlüssel (21) sowohl während eines mittels des Schaftfräsers (11) und/oder eines weiteren Schneidelements durchgeführten Bearbeitungsschritts als auch während eines mittels der Vorrichtung (20) durchgeführten Gravurvorgangs hält,
und dass sie Folgendes umfasst:
- Verschiebungsmittel (14) für die Klemme (12) entlang zweier horizontaler, zueinander senkrechter Achsen (X, Y) der Maschine (1), wobei die Verschiebungsmittel (14) für die Klemme (12) so ausgelegt sind, dass sie denselben, von der Klemme (12) gehaltenen Schlüssel (21) zwischen einer Position, die der mindestens einen Fräs- und/oder Schneideinheit (11') am nächsten liegt, und einer Position, die der Vorrichtung (20) am nächsten liegt, um mindestens eine Fläche (31) des Schlüssels zu gravieren.

10. Maschine nach Anspruch 9, **dadurch gekennzeichnet, dass** die Verschiebungsmittel (14) der Klemme (12) Folgendes umfassen:
- einen ersten Schlitten (15), der motorisiert ist, um die Bewegungen des ersten Schlittens in beide Richtungen entlang einer ersten horizontalen Achse X der Maschine (1) zu ermöglichen,
- einen zweiten Schlitten (17), der auf dem ersten Schlitten (15) angebracht ist und ebenfalls motorisiert ist, um die Bewegung des zweiten Schlittens (17) relativ zum ersten Schlitten (15) in beide Richtungen entlang der horizontalen Achse Y (die senkrecht zur X-Achse steht) der Maschine (1) zu ermöglichen.

11. Maschine nach Anspruch 9 oder 10, **dadurch gekennzeichnet, dass** die Bewegungsmittel (25) so ausgelegt sind, dass sie die Stützeinheit (24) und damit die an dieser angebrachten Gravurwerkzeuge (22, 22') entlang der mindestens einen horizontalen Achse zwischen einem Arbeitszustand (50), in dem sich die Gravurwerkzeuge (22, 22') nahe an der Klemme (12) befinden und jeweils oberhalb bzw. unterhalb der Oberseite (31) und der Unterseite des zu gravierenden Schlüssels (21) positioniert sind, wenn dieser in der Klemme (12) eingespannt ist, und einem Ruhezustand (51), in dem die Gravurwerkzeuge (22, 22') und die Stützeinheit (24) von der Klemme (12) - und somit von dem von dieser gehaltenen Schlüssel (21) - beabstandet sind, um das Entnehmen und/oder Einsetzen des Schlüssels (21) in die Klemme selbst nicht zu behindern.

12. Maschine nach einem oder mehreren der Ansprüche 9-11, **dadurch gekennzeichnet, dass** sie eine Steuer- und Befehlseinheit (19) umfasst, die den Antrieb der Verschiebungsmittel (14) der Klemme (12) und/oder die Betätigung des Schaftfräsers (11) und/oder eines anderen Schneidelements steuert.

13. Maschine nach einem oder mehreren der vorstehenden Ansprüche 9-12, **dadurch gekennzeichnet, dass** sie eine Steuereinheit umfasst, die so ausgelegt ist, dass sie die Verschiebungsmittel (14) der Klemme (12) so steuert, dass nacheinander, vorzugsweise vollautomatisch, die folgenden Vorgänge ausgeführt werden:
- Bewegen des Schlüssels (21), der von der Klemme (12) gehalten wird, relativ zum Schaftfräser (11) und/oder zu dem anderen Schneidelement, um einen spezifischen Schnitt an dem Schlüssel (21) zu erzeugen,
- Bewegen des Schlüssels (21), der stets von derselben Klemme (12) gehalten wird, in die Nähe des Arbeitsbereichs der Schneidvorrichtung (20),
- Bewegen des Schlüssels (21), der stets von derselben Klemme (12) gehalten wird, relativ zu den Gravurwerkzeugen (22, 22') der Gravurvorrichtung (20), um eine bestimmte Gravur auf mindestens einer Fläche (31) des Schlüssels (21) machen.

14. Maschine nach einem oder mehreren der Ansprüche 9-13, **dadurch gekennzeichnet, dass** sie eine Steuereinheit umfasst, die so ausgelegt ist, dass sie die Verschiebungsmittel (14) der Klemme (12) so steuert, dass die folgenden Vorgänge nacheinander, vorzugsweise vollständig automatisiert, ausgeführt werden:
- Bewegen des Schlüssels (21), der von der Klemme (12) gehalten wird, relativ zu den Gravurwerkzeugen (22, 22') der Gravurvorrichtung (20), um einen spezifischen Einschnitt auf der Fläche (31) des Schlüssels (21) zu erzeugen.
- Bewegen des Schlüssels (21), der stets von derselben Klemme (12) gehalten wird, in die Nähe des Arbeitsbereichs des Schaftfräsers (11) und/oder des anderen Schneidelements,
- Bewegen Schlüssels (21), der von der Klemme (12) gehaltenen wird, relativ zum Schaftfräser (11) und/oder zu dem anderen Schneidelement, um eine spezifischen Verzahnung an dem Schlüssel (21) zu erzeugen,

## Revendications

1. Machine de taillage de clés (1), de préférence du type professionnel ou semi-professionnel, comprenant :
- une structure de support (10),
- une zone fonctionnelle avant (2) qui est accessible par un opérateur,
- au moins une unité de fraisage et/ou de taillage (11') qui est positionnée dans ladite zone fonctionnelle avant (2) et qui comprend au moins une fraise en bout (11), et/ou un autre élément de taillage, pour effectuer le processus de découpure d'une clé (21),
- au moins une pince (12), qui est positionnée dans ladite zone fonctionnelle avant (2), pour tenir ladite clé (21) à usiner, de préférence pour tenir ladite clé (21) de sorte que sa face (31) à graver soit agencée sensiblement horizontalement,
et **caractérisée en ce qu'**elle comprend un dispositif (20) pour la gravure de deux faces (31) de ladite clé (21), de préférence de la tête (32) de ladite clé, ledit dispositif étant positionné à l'intérieur de la zone fonctionnelle avant (2) de ladite machine de taillage de clés (1), ledit dispositif comprenant :
- au moins une paire d'outils de gravure (22, 22') qui sont montés sur une unité de support (24), chaque outil de gravure (22, 22') est muni, à son extrémité libre, de sections de taillage pour la gravure d'une face (31) correspondante d'une clé (21), chaque outil de gravure (22, 22') de ladite paire est configuré pour agir sur l'une des deux faces (31) opposées de la clé (21), les extrémités libres de ladite au moins une paire d'outils de gravure (22, 22') se faisant mutuellement face et étant espacées et éloignées d'une plus grande distance que l'épaisseur que présente la clé (21) à graver en correspondance de l'une de ses zones, correspondant de préférence à la tête de ladite clé, destinée à être gravée par lesdits outils, les extrémités libres desdits outils de gravure (22, 22') étant verticalement alignées et l'une en face de l'autre, lesdits deux outils de gravure (22, 22') de ladite au moins une paire étant mis en fonctionnement par le même moteur (27) monté sur ladite unité de support (24),
- des moyens de déplacement (25) configurés pour déplacer en translation d'une manière contrôlée ladite unité de support (24) et l'au moins une paire d'outils de gravure (22, 22') le long d'un axe sensiblement vertical (Z), pour ainsi amener en contact/éloigner les sections de taillage de chaque outil de gravure (22, 22') de ladite paire avec/de ladite face (31), à graver, de la clé (21) lorsqu'elle est tenue par ladite pince (12), et le long d'au moins un axe horizontal (X, Y), pour rapprocher/éloigner lesdits outils de gravure (22, 22') de ladite pince (12) destinée à tenir ladite clé (21),
- une unité de contrôle pour le contrôle desdits moyens de déplacement (25).

2. Machine de taillage de clés selon la revendication 1, **caractérisée en ce que** ledit dispositif comprend un élément de support (42) desdits moyens de déplacement (25), ledit élément de support (42) étant configuré pour être fixé à la structure de support (10) de ladite machine de taillage de clés (1).

3. Machine de taillage de clés selon l'une ou plusieurs des revendications précédentes, **caractérisée en ce que** ladite unité de contrôle est configurée pour contrôler l'activation/la désactivation dudit moteur (27) pour l'entraînement desdits deux outils de gravure (22, 22') de ladite au moins une paire d'outils de gravure (22, 22').

4. Machine de taillage de clés selon l'une ou plusieurs des revendications précédentes, **caractérisée en ce que** :
- lesdits outils de gravure comprennent deux fraises en bout (22, 22'), ou deux autres outils dotés d'une pointe rotative,
- ledit moteur (27) est configuré pour mettre en rotation lesdites deux fraises en bout (22, 22'), ou lesdits deux autres outils à pointe rotative, autour de leur axe de développement longitudinal qui est orienté sensiblement verticalement (Z).

5. Machine de taillage de clés selon l'une ou plusieurs des revendications précédentes, **caractérisée en ce que** ladite unité de support (24) comprend une partie sensiblement en forme de « C » dotée de deux sections horizontales parallèles qui portent chacune l'un desdits outils de gravure (22, 22') dudit couple.

6. Machine de taillage de clés selon l'une ou plusieurs des revendications précédentes, **caractérisée en ce que** lesdits deux outils de gravure (22, 22') de ladite paire sont entraînés en rotation par le même moteur (27) selon des sens de rotation opposés.

7. Machine de taillage de clés selon l'une ou plusieurs des revendications précédentes, **caractérisée en ce que** lesdits moyens de déplacement (25) comprennent :
- un premier cadre (40) qui est motorisé de façon à permettre les déplacements dudit premier cadre dans les deux sens le long d'un premier axe horizontal (X, Y) de la machine (1),
- un second cadre (43) qui est monté sur le premier cadre (40) et qui est motorisé de façon à permettre les déplacements dudit second cadre (43) par rapport au premier cadre (41) dans les deux sens le long de l'axe vertical (Z) de la machine (1), ladite unité de support (24) et lesdits outils de gravure (22, 22') étant également montés sur le second cadre.

8. Machine de taillage de clés selon l'une ou plusieurs des revendications précédentes, **caractérisée en ce que** le dispositif comprend des moyens pour la détection du moment où l'extrémité libre, munie des parties de taillage, d'au moins l'un des deux outils de gravure (22, 22') vient en contact avec la face (31) de la clé (21) à graver, lesdits moyens de détection étant connectés à l'unité de contrôle pour le contrôle de manière correspondante de la translation provoquée par lesdits moyens de déplacement (25) le long de l'axe vertical (Z).

9. Machine de taillage de clés (1) selon l'une ou plusieurs des revendications précédentes, **caractérisée en ce que** :
- ladite au moins une pince (12) est configurée pour tenir la même clé (21) à la fois pendant un processus de découpure effectué au moyen de ladite fraise en bout (11), et/ou d'un autre élément de taillage, et pendant un processus de gravure effectué au moyen dudit dispositif (20),
et **en ce qu'**elle comprend :
- des moyens de déplacement (14) de ladite pince (12) le long de deux axes horizontaux (X, Y) perpendiculaires l'un à l'autre de ladite machine (1), lesdits moyens de déplacement (14) de ladite pince (12) étant configurés pour déplacer la même clé (21), tenue par ladite pince (12), entre une position la plus proche de ladite au moins une unité de fraisage et/ou de taillage (11') et une position la plus proche dudit dispositif (20) pour graver au moins une face (31) de la clé.

10. Machine selon la revendication 9, **caractérisée en ce que** lesdits moyens de déplacement (14) de ladite pince (12) comprennent :
- un premier chariot (15) qui est motorisé de façon à permettre les déplacements dudit premier chariot dans les deux sens le long d'un premier axe horizontal X de la machine (1),
- un second chariot (17) qui est monté sur le premier chariot (15) et également motorisé de façon à permettre le déplacement dudit second chariot (17) par rapport au premier chariot (15) dans les deux sens le long de l'axe horizontal Y (qui est perpendiculaire à l'axe X) de la machine (1).

11. Machine selon la revendication 9 ou 10, **caractérisée en ce que** les moyens de déplacement (25) sont configurés pour le déplacement de l'unité de support (24), et ensuite desdits outils de gravure (22, 22') montés sur ladite unité de support, le long de l'au moins un axe horizontal entre un état de travail (50), dans lequel lesdits outils de gravure (22, 22') sont proches de la pince (12) et respectivement positionnés au-dessus et au-dessous de la face supérieure (31) et de la face inférieure de la clé (21) à graver, lorsqu'elle est pincée dans la pince (12), et un état de repos (51), dans lequel lesdits outils de gravure (22, 22') et l'unité de support (24) sont espacés de la pince (12) - et par conséquent de la clé (21) tenue par cette dernière - de façon à ne pas entraver le retrait et/ou l'insertion de la clé (21) à l'intérieur de la pince elle-même.

12. Machine selon l'une ou plusieurs des revendications 9 à 11, **caractérisée en ce qu'**elle comprend une unité de contrôle et de commande (19) qui contrôle la motorisation des moyens de déplacement (14) de la pince (12) et/ou l'actionnement de ladite fraise en bout (11), et/ou d'un autre élément de taillage.

13. Machine selon l'une ou plusieurs des revendications 9 à 12 précédentes, **caractérisée en ce qu'**elle comprend une unité de contrôle qui est configurée pour contrôler lesdits moyens de déplacement (14) de ladite pince (12) de façon à réaliser en séquence, de préférence de manière complètement automatisée, les opérations suivantes :
- déplacer la clé (21), tenue par ladite pince (12), par rapport à la fraise en bout (11), et/ou audit autre élément de taillage, afin de créer une taille spécifique sur ladite clé (21),
- déplacer la clé (21), toujours tenue par la même pince (12), près de la zone d'action dudit dispositif de taillage (20),
- déplacer la clé (21), toujours tenue par la même pince (12), par rapport aux outils de gravure (22, 22') dudit dispositif de gravure (20) afin de réaliser une gravure spécifique sur au moins une face (31) de ladite clé (21).

14. Machine selon l'une ou plusieurs des revendications 9 à 13, **caractérisée en ce qu'**elle comprend une unité de contrôle qui est configurée pour contrôler lesdits moyens de déplacement (14) de ladite pince (12) de façon à réaliser en séquence, de préférence de manière complètement automatisée, les opérations suivantes :
- déplacer la clé (21), tenue par la pince (12), par rapport aux outils de gravure (22, 22') dudit dispositif de gravure (20) afin de réaliser une incision spécifique sur au moins une face (31) de ladite clé (21),
- déplacer la clé (21), toujours tenue par la même pince (12), près de la zone d'action de la fraise en bout (11), et/ou dudit autre élément de taillage,
- déplacer la clé (21), tenue par ladite pince (12), par rapport à la fraise en bout (11), et/ou audit autre élément de taillage, afin de créer une découpure spécifique sur ladite clé (21).
